# EUROPEAN PATENT SPECIFICATION

(11) **EP 4 331 904 B1**
(45) Date of publication and mention of the grant of the patent: **12.08.2026**
(21) Application number: 23179994.1
(22) Date of filing: 19.06.2023
(51) Int. Cl.: B60L 53/16, B60L 58/14, B60L 58/20

(54) **POWER MANAGEMENT SYSTEM AND POWER MANAGEMENT METHOD**
LEISTUNGSVERWALTUNGSSYSTEM UND LEISTUNGSVERWALTUNGSVERFAHREN
SYSTÈME DE GESTION D'ÉNERGIE ET PROCÉDÉ DE GESTION D'ÉNERGIE

(30) Priority: 30.08.2022 JP 2022136715
(43) Date of publication of application: 06.03.2024
(73) Proprietor: TOYOTA JIDOSHA KABUSHIKI KAISHA, Toyota-shi, Aichi-ken, 471-8571 (JP)
(72) Inventor: KOBUNA, Shunsuke, Toyota-shi, 471-8571 (JP)
(74) Representative: D Young & Co LLP

(56) References cited:
- EP-A1- 3 964 385
- US-B2- 10 707 623

## Description

### BACKGROUND OF THE INVENTION

### 1. Field of the Invention

The disclosure relates to a power management system and a power management method and, more specifically, to a power management system that exchanges electric power between a vehicle and a power demand and supply system of an electric power supplier and a power management method in a power management system that exchanges electric power between a vehicle and a power demand and supply system of an electric power supplier.

### 2. Description of Related Art

There is an existing charge and discharge apparatus (see, for example, Japanese Unexamined Patent Application Publication No. 2014-217083 (JP 2014-217083 A)). The charge and discharge apparatus includes a charger and discharger that exchanges electric power with a storage battery. The charge and discharge apparatus includes a connector, a cable, and a connection detector. The connector is to be connected to a plug of the storage battery. The cable connects the connector with the charger and discharger. The connection detector detects that the cable is connecting the plug with the charger and discharger. The charge and discharge apparatus controls the charger and discharger based on the output of the connection detector.
EP 3 964 385 A1 describes a vehicle control device, non-transitory storage medium in management computer for power grid, and connector locking control method US 10 707 623 B2 describes a charging system for vehicle.

### SUMMARY OF THE INVENTION

However, when the charge and discharge apparatus as described in JP 2014-217083 A includes a lock device that locks the connector connected to an inlet such that the connector does not come off, there is an inconvenience that charge and discharge cannot be performed because the connector is not allowed to be locked unless the connector is properly connected with the inlet of the vehicle. When the electric power of an auxiliary battery is used to activate the lock device, there are concerns that the electric power of the auxiliary battery can deplete if an operation for locking is repeated over and over.

The disclosure provides a power management system and a power management method capable of preventing depletion of electric power of an electrical storage device. Particular aspects of the invention are set out in the appended claims.

One aspect of the disclosure relates to a power management system. The power management system includes a vehicle, a charge and discharge apparatus including a cable that passes electric power to be exchanged between the vehicle and a power demand and supply system of a power supplier and a connector configured to connect the cable with the vehicle, and a command device configured to send a command to the vehicle. The vehicle includes an inlet electrically connectable with the connector, a lock device configured to lock the connector such that the connector connected to the inlet does not come off, an electrical storage device configured to supply electric power for operation of the lock device, and a controller configured to control the lock device in accordance with a command from the command device. The command device is configured to, just before an exchange of electric power between the vehicle and the power demand and supply system is started, send a lock command to the controller to cause the lock device to lock the connector such that the connector does not come off from the inlet. The controller is configured to control the lock device such that the connector is locked upon receiving the lock command and send a completion signal to the command device upon confirming that the connector is locked. The command device is configured to, when not receiving the completion signal after sending the lock command, resend the lock command, and, when, after resending the lock command, the command device fails to confirm that the connector is locked, stop resending the lock command.

With this configuration, when the command device fails to confirm that the connector is locked after sending the lock command several times, the command device stops resending the lock command. Therefore, consumption of electric power of the electrical storage device by the operation of the lock device is stopped. As a result, it is possible to provide the power management system capable of preventing depletion of electric power of the electrical storage device.

The vehicle may further include a location acquisition device configured to acquire location information of the vehicle, the controller may be configured to send the location information acquired by the location acquisition device to the command device, and the command device may be configured to, when the command device confirms, from the location information received from the controller, that the vehicle has once left from an area near the charge and discharge apparatus and returned again, resend the lock command.

With this configuration, when the vehicle once leaves from an area near the charge and discharge apparatus, the connector not locked is likely to be locked when the connector is connected to the inlet again.

The vehicle may further include a monitoring device configured to identify an SOC of the electrical storage device, the controller may be configured to send the SOC identified by the monitoring device to the command device, and the command device may be configured to receive the SOC, and set, by using the received SOC, a criterion based on which the command device determines that the command device fails to confirm that the connector is locked.

With this configuration, the command device is allowed to set a criterion based on which the command device determines that the command device fails to confirm that the connector is locked by using the SOC of the electrical storage device. Therefore, a criterion based on which electric power of the electrical storage device is not depleted is set by using the SOC of the electrical storage device. As a result, it is possible to further prevent depletion of electric power of the electrical storage device.

The command device may be configured to, when the SOC is lower than a predetermined value, reduce the number of times the command device requests to resend the lock command when the command device fails to confirm that the connector is locked, as compared to when the SOC is higher than or equal to the predetermined value.

The command device may be configured to, when not receiving the completion signal after a lapse of a predetermined period from initial sending of the lock command, determine that the command device fails to confirm that the connector is locked, and the command device may be configured to, when the SOC is lower than a predetermined value, shorten the predetermined period as compared to when the SOC is higher than or equal to the predetermined value.

The controller or the command device may be configured to, when the controller or the command device fails to confirm that the connector is locked, provide the power supplier with notification that the exchange of electric power is not allowed to be started.

With this configuration, the power supplier is able to understand a situation in which the vehicle cannot start the exchange of electric power.

Another aspect of the disclosure relates to a power management method. The power management method is a method of managing electric power in a power management system that exchanges electric power between a vehicle and a power demand and supply system of a power supplier. The power management system includes the vehicle, a charge and discharge apparatus including a cable that passes electric power to be exchanged with the vehicle and a connector configured to connect the cable with the vehicle, and a command device configured to send a command to the vehicle. The vehicle includes an inlet electrically connectable with the connector, a lock device configured to lock the connector such that the connector connected to the inlet does not come off, an electrical storage device configured to supply electric power for operation of the lock device, and a controller configured to control the lock device in accordance with a command from the command device. The power management method includes sending, by the command device, just before an exchange of electric power between the vehicle and the power demand and supply system is started, a lock command to the controller to cause the lock device to lock the connector such that the connector does not come off from the inlet, controlling, by the controller, the lock device such that the connector is locked upon receiving the lock command and sending, by the controller, a completion signal to the command device upon confirming that the connector is locked, resending, by the command device, when not receiving the completion signal after sending the lock command, the lock command, and, when, after resending the lock command, the command device fails to confirm that the connector is locked, stopping resending the lock command.

With this configuration, it is possible to provide the power management method capable of preventing depletion of electric power of the electrical storage device.

According to the aspects of the disclosure, it is possible to provide a power management system and a power management method capable of preventing depletion of electric power of an electrical storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the configuration of a VGI system according to an embodiment;
FIG. 2 is a communication system diagram of the VGI system;
FIG. 3 is a diagram that shows the configuration of a BEV;
FIG. 4 is a view that shows an input device and a notification device mounted near a driver seat of the BEV;
FIG. 5 is a diagram for illustrating a BEV connected to a public EVSE; and
FIG. 6 is a flowchart of a process before charge and discharge to and from an electric power system is stated according to the embodiment.

### DETAILED DESCRIPTION OF EMBODIMENTS

Hereinafter, an embodiment of the disclosure will be described in detail with reference to the accompanying drawings. Like reference signs denote the same or corresponding portions in the drawings, and the description thereof will not be repeated.

In recent years, an electrical power system dependent on a large-scale power plant (concentrated energy resources) owned by a power company is reconsidered, and construction of a mechanism for using energy resources owned by customers (hereinafter, demand side resources (DSRs)) in an electrical power system has been proceeding. The DSR function as distributed energy resources (hereinafter, also referred to as DER).

A virtual power plant (VPP) is proposed as a mechanism for using the DSR in an electrical power system. The VPP is a mechanism to bind a large number of DERs (for example, DSRs) with an advanced energy management technology using Internet of Things (IoT) and cause these DERs to function just like one power plant by executing remote and integrated control over the DERs. In the VPP, an electric power supplier that binds DERs and provides an energy management service is referred to as an aggregator. A power company can adjust power demand supply balance through demand response (DR) in cooperation with, for example, an aggregator.

In a vehicle grid integration (VGI) system according to the embodiment, vehicles each having an electrical storage device (more specifically, electrified vehicles, such as battery electric vehicles (hereinafter, referred to as BEVs) and plug-in hybrid electric vehicles (PHEVs)) are adopted as DSRs for implementing the VPP.

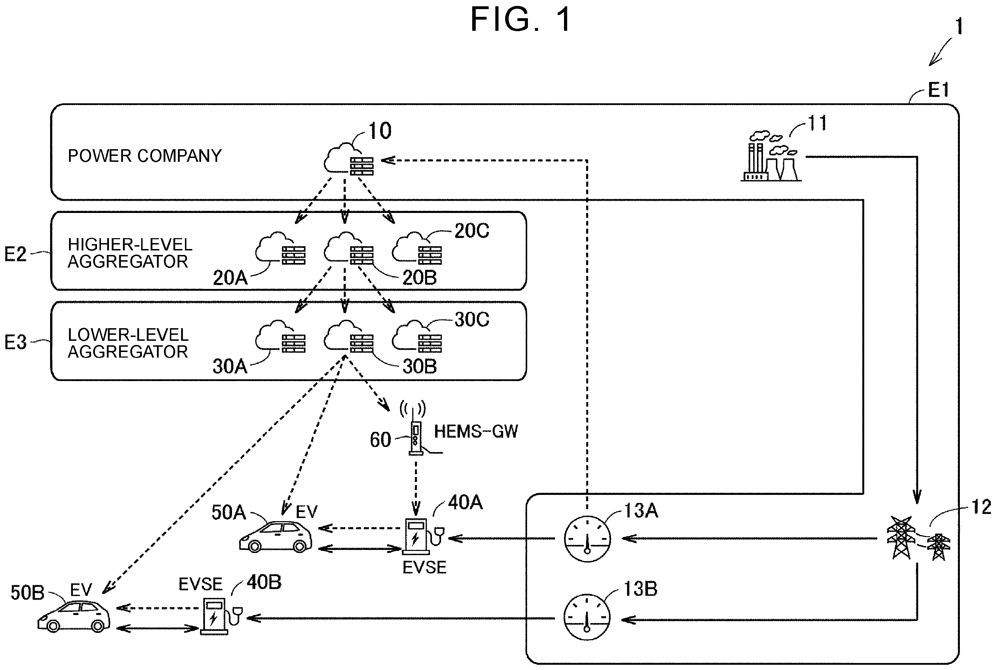

FIG. 1 is a diagram that shows the configuration of the VGI system according to the embodiment. As shown in FIG. 1, the VGI system 1 includes a power company E1, a higher-level aggregator E2, and a lower-level aggregator E3.

The power company E1 generates electric power and supplies electric power. The power company E1, for example, obtains a profit by dealing with consumers (for example, individuals and corporations) that use electric power. The power company E1 maintains and manages a server 10, a power plant 11, a power collection system 12, and smart meters 13A, 13B.

The power plant 11 includes a power generation apparatus for generating electricity. The power plant 11 is configured to supply the power collection system 12 with electric power generated by the power generation apparatus. Any power generation method of the power plant 11 is freely selected. The power generation method may be, for example, any one of thermal power generation, hydroelectric power generation, wind power generation, nuclear power generation, and photovoltaic power generation. The power collection system 12 includes a transmission line, a substation, and a distribution line. The power collection system 12 is configured to transmit and distribute electric power supplied from the power plant 11. An electric power system (power grid) is constructed of the power plant 11 and the power collection system 12.

Each of the smart meters 13A, 13B is configured to measure the amount of electric power used each time a predetermined time elapses (for example, each time 30 minutes elapse) and store and send the measured amount of electric power used to the server 10. For example, IEC (DLMS/COSEM) may be adopted as a communication protocol between the server 10 and each of the smart meters 13A, 13B. The smart meter 13A is configured to measure the amount of electric power used in an EVSE 40A (described later) (for example, the amount of electric power used to charge a BEV 50A). The smart meter 13B is configured to measure the amount of electric power used in an EVSE 40B (described later) (for example, the amount of electric power used to charge a BEV 50B). The power company E1 may be regarded as a management operator of the EVSEs 40A, 40B.

Each of business operators (hereinafter, also referred to as parent AGs) that belong to the higher-level aggregator E2 provides an energy management service by managing a plurality of business operators (hereinafter, also referred to as child AGs) that belong to the lower-level aggregator E3 and binding the amount of electric power controlled by the child AGs under the authority. The parent AGs, for example, obtain a profit by dealing with the power company E1.

The server 10 is configured to manage information on a plurality of parent AGs under the authority (for example, parent AGs registered in the server 10). Identification information (ID) for identifying a parent AG is assigned to each parent AG. The server 10 manages information on each parent AG by identifying the information with the ID of the parent AG. A parent AG may procure the supply capability (capacity) of electricity from not only battery electric vehicles (BEVs) but also resources other than BEVs (for example, biomass). The higher-level aggregator E2 includes a plurality of servers (for example, servers 20A, 20B, 20C) provided respectively for the parent AGs. Hereinafter, unless the servers are described as distinguished from one another, the servers included in the higher-level aggregator E2 are referred to as servers 20. FIG. 1 shows three servers 20 (servers 20A, 20B, 20C); however, the number of servers 20 included in the higher-level aggregator E2 is freely selected and may be greater than or equal to 10.

Each of the servers 20 included in the higher-level aggregator E2 is configured to manage information on a plurality of child AGs under the authority (for example, child AGs registered in a corresponding one of the servers 20). Each of the business operators (child AGs) that belong to the lower-level aggregator E3 controls the amount of electric power by making a request of consumers through a demand response signal (DR signal) to reduce or increase power demand. Identification information (ID) for identifying a child AG is assigned to each child AG. The server 20 manages information on each child AG by identifying the information with the ID of the child AG. The lower-level aggregator E3 includes a plurality of servers (for example, servers 30A, 30B, 30C) provided respectively for the child AGs. Hereinafter, unless the servers are described as distinguished from one another, the servers included in the lower-level aggregator E3 are referred to as servers 30. The servers 30A, 30B, 30C shown in FIG. 1 are managed by the common server 20 (for example, the server 20B). The number of the servers 30 managed by each of the servers 20 included in the higher-level aggregator E2 is freely selected and may be greater than or equal to 10.

In the VGI system 1 shown in FIG. 1, consumers managed by a child AG (by extension, the server 30) are battery electric vehicles (BEVs). The BEVs are allowed to be supplied with electric power from EVSEs (vehicle power supply equipments). In the embodiment, the VGI system 1 includes both an alternating-current power supply (AC) EVSE and a direct-current power supply (DC) EVSE.

The EVSE 40A included in the VGI system 1 shown in FIG. 1 is a domestic EVSE (that is, an EVSE installed in a house). A domestic EVSE can be managed by a home energy management system-gate way (HEMS-GW). For example, the EVSE 40A is managed by an HEMS-GW 60. The EVSE 40B included in the VGI system 1 shown in FIG. 1 is a public EVSE. A public EVSE is, for example, installed in a public facility, a commercial facility, an accommodation facility, a parking lot (for example, a service area of an expressway), or the like as an infrastructure for charging an electrical storage device mounted on an electrified vehicle. Typical examples of the public EVSE include an AC standard charger and a DC quick charger.

The VGI system 1 includes two or more of each of the EVSE, the BEV, and the HEMS-GW (FIG. 1 shows only one of each). The numbers of the EVSEs, BEVs, and HEMS-GWs included in the VGI system 1 are freely selected independently of one another and may be 10 or more or may be 100 or more. Hereinafter, unless described as distinguished from one another, each of the EVSEs, each of the BEVs, and each of the HEMS-GWs included in the VGI system 1 are respectively referred to as the EVSE 40, the BEV 50, and the HEMS-GW 60. Each of the BEVs 50 included in the VGI system 1 may be a vehicle owned by an individual (hereinafter, also referred to as a POV vehicle) or may be a vehicle managed by a Mobility as a Service (MaaS) operator (hereinafter, also referred to as a MaaS vehicle). In the embodiment, a user of each of the BEVs 50 included in the VGI system 1 has concluded a contract with the power company E1. With this contract, the user gains a right to receive payment from the power company E1 when the user adjusts power demand in response to a request from the power company E1. The power company E1 according to the embodiment may be regarded as an example of a contract supplier.

Each of the servers 30 included in the lower-level aggregator E3 is configured to manage information on a plurality of BEVs 50 under the authority (for example, BEVs registered in the server 30). Identification information for identifying a BEV 50 (hereinafter, also referred to as vehicle ID) is assigned to each BEV 50. The server 30 manages information on each BEV 50 by identifying the information with the vehicle ID. Each of the servers 30 included in the lower-level aggregator E3 is configured to be communicable with HEMS-GWs 60 under the authority (for example, HEMS-GWs registered in the server 30).

The EVSE 40A is connected to the electric power system of the power company E1 via the smart meter 13A. The amount of electric power used in the EVSE 40A is measured by the smart meter 13A and sent to the server 10. The EVSE 40B is connected to the electric power system of the power company E1 via the smart meter 13B. The amount of electric power used in the EVSE 40B is measured by the smart meter 13B and sent to the server 10. Hereinafter, unless described as distinguished from each other, each of the smart meters 13A, 13B included in the VGI system 1 is referred to as the smart meter 13.

The smart meter 13 is provided for each of the EVSEs 40 included in the VGI system 1. The EVSEs 40 included in the VGI system 1 are managed by the power company E1 and connected to the electric power system provided by the power company E1. The EVSEs 40 included in the VGI system 1 receive electric power supplied from the power company E1. In the VGI system 1, identification information for identifying an EVSE 40 (hereinafter, also referred to as equipment ID) is assigned to each EVSE 40. The server 10 manages the amount of electric power used in each EVSE 40 by identifying the amount of electric power used with the equipment ID. The power company E1 monitors the amount of electric power used in each of the EVSEs 40 (the amount of electric power supplied to each of the consumers) included in the VGI system 1 with a corresponding one of the smart meters 13 and provides electric power to each of the consumers through a corresponding one of the EVSEs 40 included in the VGI system 1.

The EVSEs 40 included in the VGI system 1 include a charging station that does not support reverse power flow and a charging station that supports reverse power flow (that is, a charge and discharge station). The charge and discharge station is configured to supply electric power received from the BEV 50 to the electric power system of the power company E1 (that is, to perform reverse power flow). The smart meter 13 provided in the charge and discharge station is configured to measure not only the amount of electric power used but also the amount of electric power provided through reverse power flow.

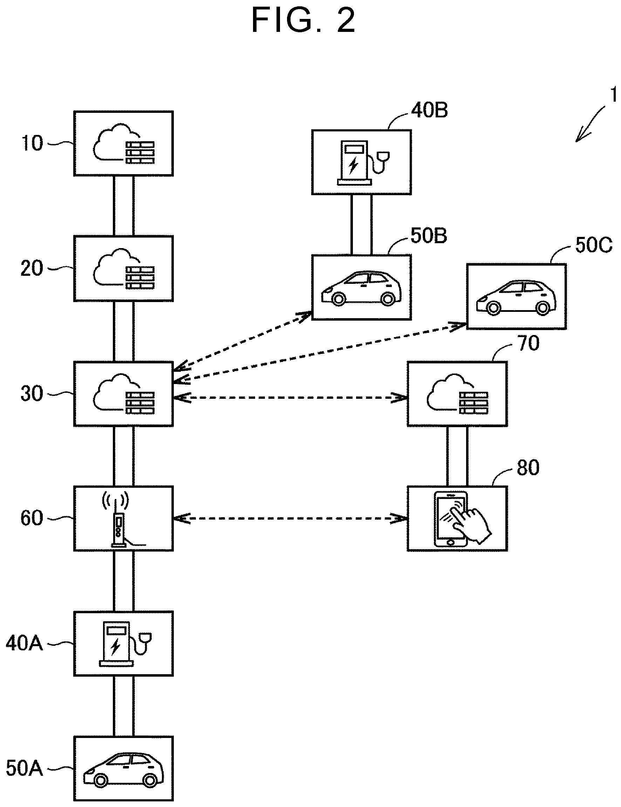

Hereinafter, the functions of the elements that make up the VGI system 1 will be described with reference to FIG. 2. FIG. 2 is a communication system diagram of the VGI system 1. In FIG. 2, the BEV 50A is electrically connected to the EVSE 40A (domestic EVSE) via a charging cable. The BEV 50B is electrically connected to the EVSE 40B (public EVSE) via a charging cable. The BEV 50C is running.

As shown in FIG. 2, in the VGI system 1, the server 10 and the server 20 are configured to be capable of intercommunicating with each other. The server 20 and the server 30 both are configured to be capable of intercommunicating with each other. A communication system between the servers 10, 20 and a communication system between the servers 20, 30 each are freely selected independently of each other and may be, for example, a virtual private network (VPN).

The server 30 is configured to be capable of communicating with each of the BEVs 50 (that is, the BEVs 50A, 50B, 50C) and each of the HEMS-GWs 60. The server 30 and each of the HEMS-GWs 60 are configured to communicate with each other via, for example, the Internet. The server 30 and each of the BEVs 50 are configured to wirelessly communicate with each other via, for example, a mobile communication network (telematics).

The HEMS-GW 60 and the EVSE 40A are configured to intercommunicate with each other via, for example, a local area network (LAN). The LAN may be a wired LAN or may be a wireless LAN.

The EVSE 40A and the BEV 50A are configured to intercommunicate with each other via a charging cable. The EVSE 40B and the BEV 50B are also configured to intercommunicate with each other via a charging cable. A communication system between the EVSE 40A and the BEV 50A and a communication system between the EVSE 40B and the BEV 50B each are freely selected independently of each other and may be a controller area network (CAN) or may be a power line communication (PLC).

The VGI system 1 further includes a data center 70 and a mobile terminal 80 registered in the data center 70. The data center 70 is configured to include, for example, a server (not shown) that manages information. In the embodiment, a smartphone with a touch panel display is adopted as the mobile terminal 80. However, the mobile terminal 80 is not limited thereto. A mobile terminal freely selected may be adopted as the mobile terminal 80. For example, a tablet terminal, a mobile game machine, and a wearable device, such as a smart watch, may also be adopted.

The data center 70 is configured to communicate with the server 30 via, for example, the Internet. The data center 70 is configured to manage pieces of information on a plurality of the mobile terminals 80 registered. Information on a mobile terminal 80 includes not only information on the terminal itself (for example, a communication address of the mobile terminal 80) but also information on a user who carries the mobile terminal 80 (for example, information indicating an electric power supplier with which the user made a contract, and the vehicle ID of the BEV 50 that belongs to the user). Identification information for identifying a mobile terminal 80 (hereinafter, also referred to as terminal ID) is assigned to each mobile terminal 80. The data center 70 manages information on each mobile terminal 80 by identifying the information with the terminal ID. Terminal ID also functions as information to identify a user (user ID). FIG. 2 shows only one mobile terminal 80; however, the mobile terminal 80 is carried by each user.

Predetermined application software (hereinafter, simply referred to as application) is installed in the mobile terminal 80. The mobile terminal 80 is configured to exchange information with both the HEMS-GW 60 and the data center 70 through the application. The mobile terminal 80 is configured to wirelessly communicate with both the HEMS-GW 60 and the data center 70 via, for example, the Internet.

The server 10 is configured to adjust power demand supply balance by using a demand response (DR). When the server 10 performs such adjustment, the server 10 initially sends a signal to make a request to participate in a DR (hereinafter, also referred to as DR participation request) to the servers 20 (for example, the servers 20A, 20B, 20C shown in FIG. 1) included in the higher-level aggregator E2. The DR participation request includes a region that is a subject of DR, the type of DR (for example, lowering DR or raising DR), and a DR period.

The server 20 is configured to, upon receiving a DR participation request from the server 10, obtain the amount of DR available (that is, the amount of electric power adjustable in accordance with a DR) and send the amount of DR available to the server 10. The server 20 can obtain the amount of DR available based on, for example, the total of DR capacities (that is, capacities sufficient to response to a DR) of the child AGs under the authority. The server 20 can acquire the DR capacities of the child AGs under the authority by, for example, making an inquiry of the server 30. The server 10 determines a DR amount for each parent AG (that is, the amount of electric power adjusted for which a request is made of the parent AG) based on the amounts of DR available, received from the servers 20 included in the higher-level aggregator E2. The server 10 sends a signal instructing the server 20 of each parent AG to execute DR (hereinafter, also referred to as a first DR execution instruction). The first DR execution instruction includes a region that is a subject of the DR, the type of DR (for example, lowering DR or raising DR), a DR amount to the parent AG, and a DR period.

The server 30 is configured to sequentially acquire, from each of the BEVs 50 under the authority, information indicating the status of the BEV 50 (for example, the location of the vehicle, battery level, running schedule, and running conditions) and save the information. When such data are stored, the charge and discharge history and running history of each of the BEVs 50 under the authority are saved in the server 30. The server 30 is configured to sequentially acquire, from each of the HEMS-GWs 60 respectively connected to the EVSEs 40 under the authority, information indicating the status of the EVSE 40 (for example, information indicating whether the EVSE 40 is in charging, charging schedule, and charging conditions) and save the information. When such data are stored, the charge history and reverse power flow history of each of the EVSEs 40 under the authority are saved in the server 30.

A user is able to send, to the data center 70, information indicating the status and schedule of the user by operating the mobile terminal 80. Examples of the information indicating the status of the user include information indicating whether the user is available to respond to a DR. Examples of the information indicating a schedule of the user include time at which a POV vehicle leaves home and a service schedule of a MaaS vehicle. The data center 70 is configured to identify and save the information received from the mobile terminal 80 with the terminal ID. The server 30 is allowed to acquire information on a user from the data center 70.

The server 30 is configured to, when there is the above-described inquiry from the server 20, obtain the DR capacity of the child AG corresponding to the server 30 based on information on each of the BEVs 50, the EVSEs 40, and the users and send the DR capacity to the server 20. Upon receiving the first DR execution instruction from the server 10, the server 20 determines a DR amount for each child AG (that is, the amount of electric power for which a request is made of the child AG) based on the DR capacity received from each of the servers 30 included in the lower-level aggregator E3. The server 10 sends a signal instructing the server 30 of each child AG to execute a DR (hereinafter, also referred to as a second DR execution instruction). The second DR execution instruction includes a region that is a subject of the DR, the type of DR (for example, lowering DR or raising DR), a DR amount to the child AG, and a DR period.

Upon receiving the second DR execution instruction, the server 30 allocates a DR amount to each of the BEVs 50 allowed to respond to a DR, among the BEVs 50 under the authority, generates a DR signal for each BEV 50, and sends the DR signal to each BEV 50. The DR signal includes the type of DR (for example, lowering DR or raising DR), a DR amount for the BEV 50, and a DR period. The DR amount of the raising DR, required of the BEV 50 in the DR period, may be, for example, charge electric power in the DR period or may be the amount of charge (that is, a time integral value of charge electric power) in the DR period. The DR amount of the lowering DR, required of the BEV 50 in the DR period, may be, for example, the amount of discharge (that is, a time integral value of discharge electric power) in the DR period or may be a guard value for limiting charge electric power (an upper limit of charge electric power) in the DR period.

When the user of each of the BEVs 50 included in the VGI system 1 receives the DR signal, the user is able to contribute to adjusting a power demand amount by performing charge or discharge in accordance with a DR by using a charging station that the power company E1 that is a contract supplier manages (that is, any one of the EVSEs 40 included in the VGI system 1). The user that has contributed to adjusting the power demand gets a right to receive commission (compensation for contribution) from the power company E1 based on the contract with the power company E1.

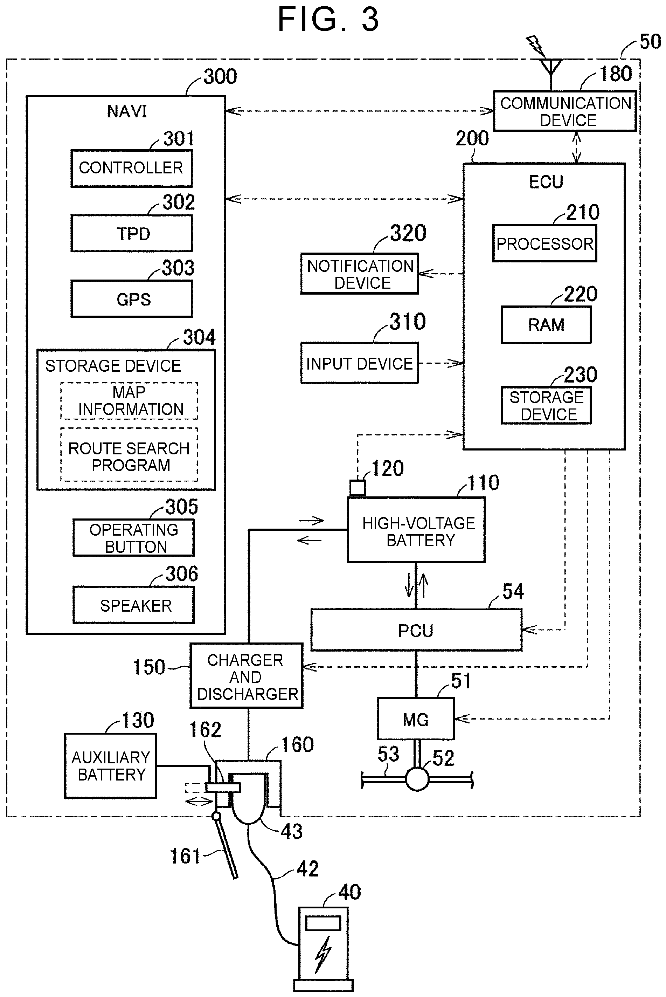

FIG. 3 is a diagram that shows the configuration of the BEV 50. As shown in FIG. 3, the BEV 50 includes a motor generator (hereinafter, referred to as MG) 51, a power transmission gear 52, a drive shaft 53, a power control unit (hereinafter, referred to as PCU) 54, a high-voltage battery 110, a monitoring unit 120, a charger and discharger 150, an inlet 160, a communication device 180, an electronic control unit (hereinafter, referred to as ECU) 200, a car navigation system (hereinafter, also referred to as NAVI system) 300, an input device 310, and a notification device 320. The ECU 200 is configured to execute charge control and discharge control over the high-voltage battery 110.

The high-voltage battery 110 is configured to store electric power for running. The high-voltage battery 110 is, for example, a secondary battery, such as a lithium ion battery and a nickel-metal hydride battery. The secondary battery may be a single cell or may be a battery pack. Instead of the secondary battery, another electrical storage device, such as an electrical double-layer capacitor, may be adopted.

The inlet 160 is configured to receive electric power supplied from outside the BEV 50. A connector 43 of a charging cable 42 is allowed to be connected to the inlet 160. The inlet 160 includes a lock device 162 capable of locking the connector 43 such that the connector 43 connected to the inlet 160 does not come off. The lock device 162 includes a movable portion that locks the connector 43 when inserted into the connector 43 and a detecting portion that detects movement of the movable portion to a position where the connector 43 is locked. The movable portion of the lock device 162 is operable on low-voltage (for example, 12 V) electric power of an auxiliary battery 130. When the detecting portion of the lock device 162 detects movement of the connector 43 to the locked position, the detecting portion sends a signal indicating the detection to the ECU 200.

When the BEV 50 is in an IG-ON state, electric power of the high-voltage battery 110 is converted in voltage, and is charged into the auxiliary battery 130. However, when the BEV 50 is in an IG-OFF state, electric power of the high-voltage battery 110 is not charged into the auxiliary battery 130. When the movable portion of the lock device 162 is inserted into the connector 43, the connector 43 does not come off. A lid 161 is provided outside the inlet 160. The lid 161 has an openable and closable door shape. When the lid 161 is closed, the connector 43 is not allowed to be connected to the inlet 160. When the lid 161 is open, the connector 43 is allowed to be connected to the inlet 160.

The charger and discharger 150 is located between the inlet 160 and the high-voltage battery 110. The charger and discharger 150 is configured to include a relay and a power conversion circuit (for example, a bidirectional converter) (both are not shown). The relay switches between connection and disconnection of a power path from the inlet 160 to the high-voltage battery 110. The relay and the power conversion circuit, included in the charger and discharger 150, are controlled by the ECU 200.

When the EVSE 40 outside the BEV 50 and the inlet 160 are connected via the charging cable 42, electric power is allowed to be exchanged between the EVSE 40 and the BEV 50. For example, the high-voltage battery 110 of the BEV 50 is allowed to be charged upon receiving electric power supplied from outside the BEV 50 (hereinafter, also referred to as external charging). Electric power for external charging is, for example, supplied from the EVSE 40 to the inlet 160 through the charging cable 42. The charger and discharger 150 is configured to convert the electric power received by the inlet 160 to electric power suitable for charging the high-voltage battery 110 and output the converted electric power to the high-voltage battery 110. When the EVSE 40 and the inlet 160 are connected via the charging cable 42, power supply from the BEV 50 to the EVSE 40 through the charging cable 42 (by extension, discharge of the high-voltage battery 110) is allowed to be performed. Electric power for power supply to outside the BEV 50 (hereinafter, also referred to as external power supply) is supplied from the high-voltage battery 110 to the charger and discharger 150. The charger and discharger 150 is configured to convert the electric power supplied from the high-voltage battery 110 to electric power suitable for external power supply and output the converted electric power to the inlet 160. When any one of external charging and external power supply is performed, the relay of the charger and discharger 150 is set to a closed state (connected state). When none of external charging and external power supply is performed, the relay of the charger and discharger 150 is set to an open state (disconnected state).

The charger and discharger 150 and the inlet 160 may be a charger and discharger and an inlet that support AC mode or may be a charger and discharger and an inlet that support DC mode. The BEV 50 may include multiple types of charger and dischargers and inlets so as to support multiple types of modes (for example, both AC mode and DC mode).

The configuration of the charger and discharger 150 is not limited thereto and may be modified as needed. The charger and discharger 150 may include, for example, at least one of a rectifier circuit, a power factor correction circuit, an isolation circuit (for example, an isolation transformer), an inverter, and a filter circuit.

The MG 51 is, for example, a three-phase alternating-current motor generator. The MG 51 is driven by the PCU 54 and is configured to generate driving force to cause the BEV 50 to run. The PCU 54 is configured to include, for example, a controller, an inverter, and a converter (all are not shown). The controller is configured to include a processor. The controller of the PCU 54 is configured to receive an instruction (control signal) from the ECU 200 and control the inverter and the converter of the PCU 54 in accordance with the instruction. The PCU 54 further includes a system main relay (hereinafter, referred to as SMR) (not shown). The SMR is configured to switch between connection and disconnection of a power path from the high-voltage battery 110 to the PCU 54. The status (connection or disconnection) of the SMR is controlled by the ECU 200. The SMR is set to a closed state (connected state) while the vehicle is running.

The MG 51 is mechanically connected to the drive shaft 53 via the power transmission gear 52 that serves as a speed reduction gear. Drive wheels (not shown) of the BEV 50 are respectively mounted at both ends of the drive shaft 53. The drive wheels are configured to rotate integrally with the drive shaft 53. The MG 51 is driven by electric power supplied from the high-voltage battery 110 through the inverter and the converter of the PCU 54 and is placed in a power running state. The MG 51 in the power running state rotates the drive shaft 53 (by extension, the drive wheels of the BEV 50). The MG 51 is configured to perform regenerative power generation and supply the generated electric power to the high-voltage battery 110. The drive system of the BEV 50 is freely selected. The drive system of the BEV 50 may be, for example, a front-wheel-drive system or a four-wheel-drive system. FIG. 3 shows a configuration in which only one MG is provided. The number of MGs is not limited thereto. A plurality of (for example, two) MGs may be provided.

The monitoring unit 120 includes various sensors that detect the statuses (for example, temperature, current, and voltage) of the high-voltage battery 110 and outputs the detected results to the ECU 200. The ECU 200 can acquire the statuses (for example, temperature, current, voltage, state of charge (SOC), and internal resistance) of the high-voltage battery 110 based on the outputs (that is, the detected values of various sensors) of the monitoring unit 120. The SOC indicates a remaining amount of electricity and, for example, represents the ratio of the current amount of electricity to the amount of electricity in a fully charged state on a scale of 0% to 100%.

The communication device 180 includes a communication interface (I/F) for communicating with each of the server 30, the EVSE 40, and the mobile terminal 80. The communication device 180 is registered in the server 30. The communication device 180 may further include a communication I/F for communicating with the HEMS-GW 60 and the data center 70.

The ECU 200 is configured to include a processor 210, a random access memory (RAM) 220, and a storage device 230. For example, a central processing unit (CPU) may be adopted as the processor 210. The RAM 220 functions as a working memory that temporarily stores data to be processed by the processor 210. The storage device 230 is configured to be capable of saving information stored. Examples of the storage device 230 include a read only memory (ROM) and a rewritable nonvolatile memory. Not only a program but also information to be used by the program (for example, maps, mathematical expressions, and various parameters) is stored in the storage device 230. The ECU 200 is configured to communicate with devices outside the BEV 50 (for example, the server 30, the EVSE 40, and the mobile terminal 80) through the communication device 180. The number of processors included in the ECU 200 is freely selected, and a processor may be prepared for each predetermined control.

The NAVI system 300 is configured to include a controller 301, a touch panel display (hereinafter, also referred to as TPD) 302, a global positioning system (GPS) module 303, a storage device 304, an operating button 305, and a speaker 306. The controller 301 is configured to include a processor and a RAM (both are not shown). For example, at least one of a hard disk drive and a solid state drive (SSD) may be adopted as the storage device 304. The storage device 304 stores map information and a route search program. In the embodiment, a smart speaker (that is, a speaker with an artificial intelligence (AI) assistant function that supports an interactive voice operation) is adopted as the speaker 306. However, the configuration is not limited thereto. Instead of a smart speaker, a general speaker that does not accept voice input may be adopted.

The TPD 302 receives touch input from a user or displays a map and other information. The speaker 306 receives voice input from a user and outputs sound (including voice). The operating button 305 also receives input from a user. Each of the TPD 302, the speaker 306, and the operating button 305 functions as an input device and is configured to output, to the controller 301, a signal corresponding to input from a user. Each of the TPD 302 and the speaker 306 functions as a notification device and is configured to provide notification to a user (for example, an occupant of the BEV 50).

The GPS module 303 is configured to receive signals from GPS satellites (not shown) (hereinafter, GPS signals). The controller 301 is configured to identify the location of the BEV 50 by using the GPS signals. The controller 301 is configured to indicate the location of the BEV 50 in real time on the map displayed on the TPD 302 by controlling the TPD 302. The controller 301 is configured to make a route search for finding an optimal route (for example, shortest route) from the current location of the BEV 50 to a destination and shows the optimal route found by the route search on the map displayed on the TPD 302 by running a route search program. A user is able to set a destination to the controller 301 through the input devices (that is, the TPD 302, the speaker 306, and the operating button 305).

The BEV 50 is equipped with the input device 310 in addition to the input devices of the NAVI system 300. The input device 310 is configured to receive input from a user and output, to the ECU 200, a signal corresponding to input from the user. A communication system between the ECU 200 and the input device 310 may be wired or wireless. Examples of the input device 310 include various switches, various pointing devices, a keyboard, a smart speaker, and a touch panel.

The BEV 50 is equipped with the notification device 320 in addition to the notification device of the NAVI system 300. The notification device 320 is configured to, when there is a request from the ECU 200, execute a predetermined notification process to a user (for example, an occupant of the BEV 50). The notification device 320 may be any one of a display device (for example, a touch panel display), a speaker (for example, a smart speaker), and a lamp (for example, a malfunction indicator lamp (MIL)).

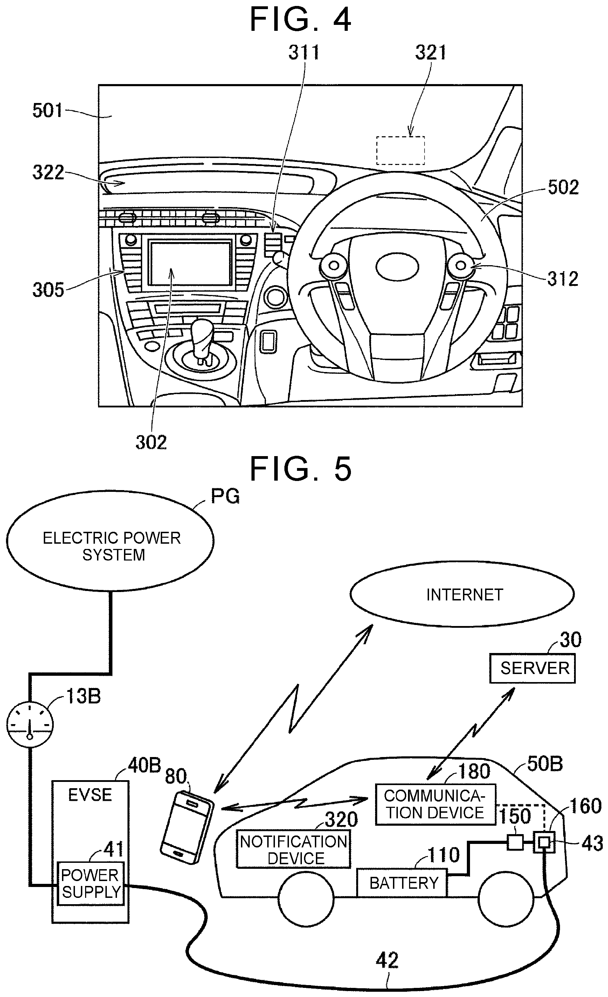

FIG. 4 is a view that shows the input device and the notification device mounted near a driver seat of the BEV 50. As shown in FIG. 4, the BEV 50 includes operating buttons 311, 312, a head-up display (hereinafter, referred to as HUD) 321, and a meter panel 322. The operating buttons 311, 312 are included in the input device 310 (FIG. 3). The operating button 311 is provided on an instrument panel of the BEV 50. The operating button 312 is provided at a steering wheel 502 of the BEV 50. The HUD 321 and the meter panel 322 are included in the notification device 320 (FIG. 3). The HUD 321 is a display provided on a windshield 501 of the BEV 50. The meter panel 322 is located near the windshield 501. The meter panel 322 is configured to indicate information on the BEV 50 (for example, battery level (SOC), travel speed, travel distance, average electric power efficiency, and ambient temperature). The TPD 302 and the operating button 305 of the NAVI system 300 (FIG. 3) are provided on the instrument panel of the BEV 50. The main body of the NAVI system 300 is disposed in the instrument panel.

FIG. 5 is a diagram for illustrating the BEV 50B connected to the public EVSE 40B. As shown in FIG. 5, the BEV 50B is electrically connected to the EVSE 40B via the charging cable 42 in a state where the BEV 50B is parked in a parking lot in which the EVSE 40B is installed. The charging cable 42 has the connector 43 at its distal end. When the connector 43 of the charging cable 42 hooked up to the EVSE 40B is connected to the inlet 160 of the BEV 50B, communication between the BEV 50B and the EVSE 40B is possible, and electric power is allowed to be supplied from a power supply 41 of the EVSE 40B (that is, a power supply provided outside the BEV 50B) to the BEV 50B (by extension, the high-voltage battery 110). The power supply 41 is connected via the smart meter 13B to the electric power system PG provided by the power company E1 (FIG. 1). The power supply 41 is configured to supply electric power, supplied from the electric power system PG, to the BEV 50B via the charging cable 42. The amount of electric power used in the EVSE 40B is measured by the smart meter 13B.

The communication device 180 mounted on the BEV 50B is configured to communicate with the EVSE 40B via the charging cable 42. The communication device 180 is configured to, for example, wirelessly communicate with the server 30 via a mobile communication network. In the embodiment, the communication device 180 and the mobile terminal 80 are configured to wirelessly communicate with each other. Communication between the communication device 180 and the mobile terminal 80 may be near field communication (for example, direct communication within a range inside the vehicle and around the vehicle). In the embodiment, no communication is performed between the server 30 and the EVSE 40B. Alternatively the server 30 and the EVSE 40B may be configured to communicate with each other. At least one of the communication device 180 and the mobile terminal 80 may be configured to receive the amount of electric power used in the EVSE 40B from the smart meter 13B. At least one of the notification device 320 and the mobile terminal 80 may be configured to display at least one of a measured value of the smart meter 13B, a DR amount allocated to the BEV 50B, and a percentage achievement of the DR amount during charging or discharging of the high-voltage battery 110.

In the VGI system 1, when the connector 43 is locked by the lock device 162 of the inlet 160 of the BEV 50, charge and discharge according to a DR with the electric power system is possible. However, if the connector 43 is not properly connected to the inlet 160 of the BEV 50, the connector 43 is not allowed to be locked, so it is not possible to perform charge and discharge. When electric power of the auxiliary battery 130 is used to activate the lock device 162, there are concerns that electric power of the auxiliary battery 130 can deplete if an operation for locking is repeated over and over.

The command device (for example, the EVSE 40 or the server 30 of the lower-level aggregator E3; if there is no lower-level aggregator E3, the server 20 of the higher-level aggregator E2; if there is no lower-level aggregator E3 and no higher-level aggregator E2, the server 10 of the power company E1) sends, to the ECU 200, a lock command to instruct the lock device 162 to lock just before the start of an exchange of electric power between the electric power system and the BEV 50. Upon receiving the lock command, the ECU 200 causes the lock device 162 to lock the connector 43. When the ECU 200 confirms that the connector 43 is locked, the ECU 200 sends a completion signal to the command device. The command device is configured to, when not receiving the completion signal after sending the lock command, resend the lock command, and, when, after resending the lock command, the command device fails to confirm that the connector is locked, stop resending the lock command.

Thus, when, after sending a lock command over and over, the command device fails to confirm that the connector 43 is locked, the command device stops resending the lock command. Therefore, it is possible to stop consuming electric power of the auxiliary battery 130 through the operation of the lock device 162. As a result, depletion of electric power of the auxiliary battery 130 is prevented.

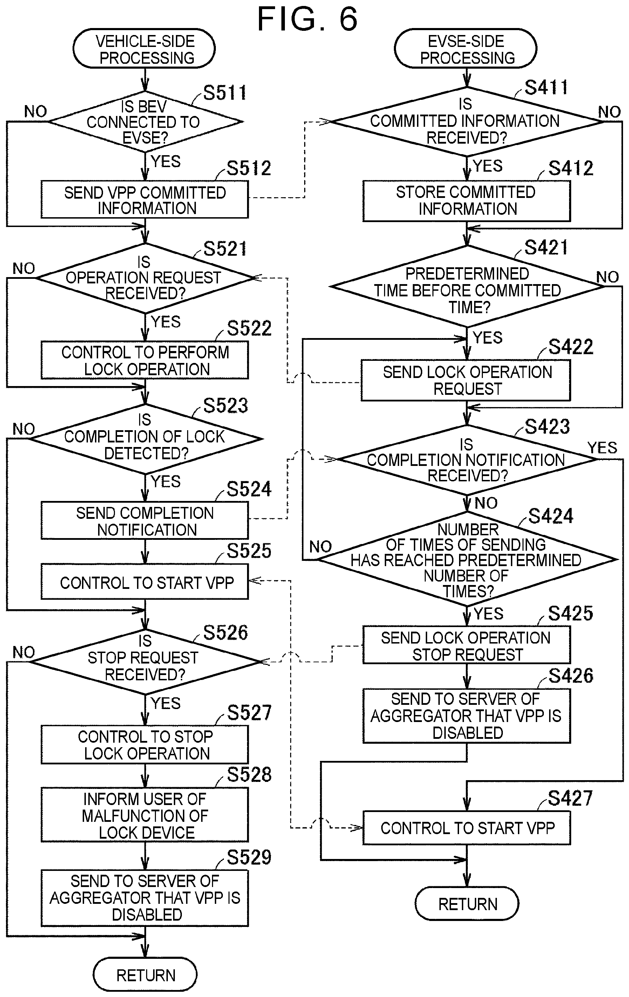

FIG. 6 is a flowchart of a process before charge and discharge of electric power to and from the electric power system is stated according to the embodiment. The BEV 50 includes a detection circuit that detects that the connector 43 of the EVSE 40 is connected to the inlet 160. As shown in FIG. 6, at the BEV 50 side, initially, the ECU 200 determines whether the BEV 50 is connected to the EVSE 40 based on whether a signal indicating that the connector 43 is connected to the inlet 160 has been received from the detection circuit (step S511).

When the ECU 200 determines that the BEV 50 is connected to the EVSE 40 (YES in step S511), the ECU 200 sends, to the EVSE 40, committed information for participating in VPP (for example, information on participation date and time, charge and discharge electric power, and the like, determined with the power company E1, the higher-level aggregator E2, or the lower-level aggregator E3) (step S512).

The EVSE 40 determines whether committed information has been received from the BEV 50 (step S411). When the EVSE 40 determines that committed information has been received (YES in step S411), the EVSE 40 stores the received committed information (step S412).

When the EVSE 40 determines that committed information has not been received yet (NO in step S411) or after step S412, the EVSE 40 determines whether the current time is a predetermined time (for example, five minutes, one minute, or the like) before committed time at which charge and discharge in the VPP is started, indicated by the participation date and time of the committed information (step S421).

When the EVSE 40 determines that the current time is a predetermined time before the committed time (YES in step S421), the EVSE 40 sends, to the BEV 50, a lock operation request to perform the operation of the lock device 162 to lock the connector 43 (step S422).

At the BEV 50 side, the ECU 200 determines whether the lock operation request has been received from the EVSE 40 (step S521). When the ECU 200 determines that the lock operation request has been received (YES in step S521), the ECU 200 causes the lock device 162 to perform the operation to lock the connector 43 (step S522).

When the ECU 200 determines that the lock operation request has not been received yet (NO in step S521) or after step S522, the ECU 200 determines whether completion of lock is detected as a result of receiving a signal indicating that lock operation is complete from the detecting portion of the lock device 162 (step S523).

When the ECU 200 determines that completion of lock is detected (YES in step S523), the ECU 200 sends completion notification that lock operation is complete to the EVSE 40 (step S524) After that, the ECU 200 cooperates with the EVSE 40 to cause the charger and discharger 150 and the like to start charge and discharge in the VPP (step S525).

When the EVSE 40 determines that the current time is not a predetermined time before the committed time (NO in step S421) or after step S422, the EVSE 40 determines whether completion notification has been received from the BEV 50 (step S423).

When the EVSE 40 determines that completion notification has not been received yet (NO in step S423), the EVSE 40 determines whether the number of times the lock operation request is sent has reached a predetermined number of times (step S424). When the EVSE 40 determines that the number of times the lock operation request is sent has not reached the predetermined number of times (NO in step S424), the EVSE 40 returns the process to step S422 and resends the lock operation request.

When the EVSE 40 determines that completion notification has been received (YES in step S423), the EVSE 40 cooperates with the BEV 50 to cause the power supply 41 and the like to start charge and discharge in the VPP (step S427).

When the EVSE 40 determines that the number of times the lock operation request is sent has reached the predetermined number of times (YES in step S424), the EVSE 40 sends, to the BEV 50, a lock operation stop request to stop the operation of the lock device 162 to lock the connector 43 (step S425). After that, the EVSE 40 sends, to the server 30 of the lower-level aggregator E3, that charge and discharge of the BEV 50 in the VPP is disabled (step S426).

At the BEV 50 side, the ECU 200 determines whether the lock operation stop request has been received from the EVSE 40 (step S526). When the ECU 200 determines that the lock operation stop request has been received (YES in step S526), the ECU 200 causes the lock device 162 to stop the lock operation (step S527).

The ECU 200 causes the TPD 302 or the speaker 306 to inform a user of a malfunction of the lock device 162 (step S528). The ECU 200 sends, to the server 30 of the lower-level aggregator E3, that charge and discharge of the BEV 50 in the VPP is disabled (step S529).

### Modifications

(1) In the above-described embodiment, it is assumed that the power supplier is the power company E1. However, the configuration is not limited thereto. The power supplier may be another business operator that is not a power generation operator unlike the power company E1. The power supplier may be, for example, a general power transmission and distribution operator, may be a retail electric power supplier, or may be a consumer of electric power like a general business operator.

(2) In the above-described embodiment, it is assumed that the electrified vehicle is a BEV. However, the configuration is not limited thereto. The electrified vehicle just needs to be a vehicle that includes an electrical storage device and that is capable of performing external charging and discharging. The electrified vehicle may be, for example, a PHEV or may be a plug-in fuel cell electric vehicle (FCEV).

(3) In the above-described embodiment, as shown in FIG. 6, information for charge and discharge in the VPP is sent and received between the BEV 50 and the EVSE 40. However, the configuration is not limited thereto. The information may be sent and received between the BEV 50 and any one of the servers 10, 20, 30.

(4) In the above-described embodiment, as shown in step S424 of FIG. 6, the command device is configured to send the lock operation stop request on condition that the command device has not received completion notification yet although the number of times the lock operation request is sent has reached the predetermined number of times. However, the configuration is not limited thereto. The command device may be configured to send the lock operation stop request on condition that, after resending the lock operation request, the command device fails to confirm that the connector 43 is locked. For example, the command device may be configured to send the lock operation stop request on condition that the command device has not received completion notification although a predetermined period has elapsed from initial sending of the lock command. Alternatively, the BEV 50 may be configured to detect that the lock device 162 cannot lock, and the command device may be configured to send the lock operation stop request on condition that error information indicating that the lock device 162 cannot lock has been received from the BEV 50.

(5) In the above-described embodiment, the EVSE 40 may acquire an SOC detected by the monitoring unit 120 of the high-voltage battery 110 of the BEV 50 and set a criterion (for example, the predetermined number of times or the predetermined period described in the above (4)) to determine that the command device fails to confirm that the connector 43 is locked, by using the acquired SOC. When, for example, the SOC is lower than a predetermined value (for example, 50%, 20%, or 10%), the predetermined number of times may be reduced as compared to when the SOC is higher than the predetermined value (for example, 100 times for a high SOC, and 10 times for a low SOC) or the predetermined period may be shortened as compared to when the SOC is higher than the predetermined value (for example, 10 minutes for a high SOC, and one minute for a low SOC).

(6) In the above-described embodiment, when the EVSE 40 confirms that, in a period from when the lock operation request is sent in step S422 of FIG. 6 to when completion notification is received in step S423, the connector 43 is pulled out from the inlet 160, the BEV 50 once leaves from an area near the EVSE 40 (for example, a range in which the charging cable 42 reaches or a range of a predetermined radius, such as several meters) and returns again, by acquiring information on the location of the GPS module 303 of the BEV 50, the EVSE 40 may start sending the lock operation request again.

(7) The above-described embodiment may be regarded as the disclosure of a power management system like the VGI system 1, may be regarded as the disclosure of a power management method in a power management system, may be regarded as the disclosure of the server 10, the server 20, the server 30, the EVSE 40, or the BEV 50, or may be regarded as the disclosure of a power management method or a power management program to be run on the server 10, the server 20, the server 30, the EVSE 40, or the BEV 50.

### Summary

(1) As shown in FIG. 1 and Fig. 2, the VGI system 1 is a system that exchanges electric power between the electric power system of the power supplier and the BEV 50. As shown in FIG. 1 and FIG. 2, the VGI system 1 includes the BEV 50, the EVSE 40 including the charging cable 42 that passes electric power to be exchanged with the BEV 50 and the connector 43 for connecting the charging cable 42 with the BEV 50, and the command device (which is, for example, the EVSE 40 and may be the server 10, the server 20, or the server 30) configured to send a command to the BEV 50. As shown in FIG. 3, the BEV 50 includes the inlet 160 electrically connectable with the connector 43, the lock device 162 configured to lock the connector 43 such that the connector 43 connected to the inlet 160 does not come off, the auxiliary battery 130 configured to supply electric power for operation of the lock device 162, and the ECU 200 configured to control the lock device 162 in accordance with a command from the command device. As shown in FIG. 6, the command device is configured to, just before an exchange of electric power between the electric power system and the BEV 50 is started, send, to the ECU 200, a lock command to cause the lock device 162 to lock the connector 43 such that the connector 43 does not come off from the inlet 160 (for example, step S422). As shown in FIG. 6, the ECU 200 is configured to, upon receiving the lock command, cause the lock device 162 to lock the connector 43 (for example, step S522). The ECU 200 is configured to, when the ECU 200 confirms that the connector 43 is locked, send a completion signal to the command device (for example, step S524). As shown in FIG. 6, the command device is configured to, when not receiving the completion signal after sending the lock command, resend the lock command (for example, step S422) and, when, after resending the lock command, the command device fails to confirm that the connector 43 is locked, stop resending the lock command (for example, step S425).

Thus, when the command device fails to confirm that the connector 43 is locked after sending a lock command over and over, the command device stops resends the lock command. Therefore, it is possible to stop consuming electric power of the auxiliary battery 130 through the operation of the lock device 162. As a result, depletion of electric power of the auxiliary battery 130 is prevented.

(2) As shown in FIG. 3, the BEV 50 further includes the GPS module 303 configured to acquire location information of the BEV 50. As described in the modifications, the ECU 200 may be configured to send, to the command device, the location information acquired by the GPS module 303, and the command device may be configured to, when the command device confirms, from the location information received from ECU 200, that the BEV 50 once leaves from an area near the EVSE 40 and returns again, resend the lock command.

Thus, when the BEV 50 once leaves from an area near the EVSE 40 and then the connector 43 is connected to the inlet 160 again, the likelihood that the connector 43 not locked is locked is increased.

(3) As shown in FIG. 3, the BEV 50 further includes the monitoring unit 120 configured to identify the SOC of the auxiliary battery 130. As described in the modifications, the ECU 200 may be configured to send, to the command device, the SOC identified by the monitoring unit 120, and the command device may be configured to set, by using the received SOC, a criterion based on which the command device determines that the command device fails to confirm that the connector 43 is locked.

Thus, the command device sets, by using the SOC of the auxiliary battery 130, the criterion based on which the command device determines that the command device fails to confirm that the connector 43 is locked. Therefore, it is possible to set, by using the SOC of the auxiliary battery 130, a criterion based on which electric power of the auxiliary battery 130 does not deplete. As a result, it is possible to further prevent depletion of electric power of the auxiliary battery 130.

(4) As shown in FIG. 6, the ECU 200 or the command device may be configured to, when the ECU 200 or the command device fails to confirm that the connector 43 is locked, provide a supplier with notification that an exchange of electric power is not allowed to be started (for example, step S426 and step S529).

Thus, the power supplier is able to understand that the BEV 50 is not allowed to start an exchange of electric power.

The embodiment described above is illustrative and not restrictive in all respects. The scope of the disclosure is not defined by the description of the above-described embodiment, and is defined by the appended claims. The scope of the disclosure is intended to encompass all modifications within the scope of the appended claims

## Claims

1. A power management system (1) comprising:
a vehicle (50; 50A; 50B; 50C);
a high-voltage battery (110) configured to store electric power for running the vehicle (50; 50A; 50B; 50C);
a charge and discharge apparatus (40; 40A; 40B) including a cable (42) that passes electric power to be exchanged between the vehicle and a power demand and supply system of a power supplier and a connector (43) configured to connect the cable with the vehicle (50; 50A; 50B; 50C); and
a command device (10; 20; 30; 40) configured to send a command to the vehicle, wherein the command device comprises a server (10, 20, 30) or a charging station (40); and wherein:
the vehicle (50; 50A; 50B; 50C) includes
an inlet (160) electrically connectable with the connector,
a lock device (162) configured to lock the connector such that the connector (43) connected to the inlet (160) does not come off,
an auxiliary battery (130) configured to supply electric power for operation of the lock device (162), and
a controller (200) configured to control the lock device in accordance with the command from the command device;
the command device is configured to, just before an exchange of electric power between the vehicle (50; 50A; 50B; 50C) and the power demand and supply system is started, send a lock command to the controller to cause the lock device (162) to lock the connector (43) such that the connector (43) does not come off from the inlet (160);
the controller (200) is configured to control the lock device (162) such that the connector (43) is locked upon receiving the lock command and send a completion signal to the command device upon confirming that the connector is locked; and
the command device is configured to
when not receiving the completion signal after sending the lock command, resend the lock command, and
when, after resending the lock command, the command device fails to confirm that the connector (43) is locked, stop resending the lock command;
wherein the vehicle further includes a monitoring device (120) configured to identify an SOC of the electrical storage device;
the controller (200) is configured to send the SOC identified by the monitoring device to the command device; and
the command device is configured to receive the SOC, and set, by using the received SOC, a criterion based on which the command device determines that the command device fails to confirm that the connector (43) is locked; and
wherein the command device is configured to, when the SOC is lower than a predetermined value, reduce the number of times the command device requests to resend the lock command when the command device fails to confirm that the connector (43) is locked, as compared to when the SOC is higher than or equal to the predetermined value.

2. A power management system (1) comprising:
a vehicle (50; 50A; 50B; 50C);
a high-voltage battery (110) configured to store electric power for running the vehicle (50; 50A; 50B; 50C);
a charge and discharge apparatus (40; 40A; 40B) including a cable (42) that passes electric power to be exchanged between the vehicle and a power demand and supply system of a power supplier and a connector (43) configured to connect the cable with the vehicle (50; 50A; 50B; 50C); and
a command device (10; 20; 30; 40) configured to send a command to the vehicle, wherein the command device comprises a server (10, 20, 30) or a charging station (40); and wherein:
the vehicle (50; 50A; 50B; 50C) includes
an inlet (160) electrically connectable with the connector,
a lock device (162) configured to lock the connector such that the connector (43) connected to the inlet (160) does not come off,
an auxiliary battery (130) configured to supply electric power for operation of the lock device (162), and
a controller (200) configured to control the lock device in accordance with the command from the command device;
the command device is configured to, just before an exchange of electric power between the vehicle (50; 50A; 50B; 50C) and the power demand and supply system is started, send a lock command to the controller to cause the lock device (162) to lock the connector (43) such that the connector (43) does not come off from the inlet (160);
the controller (200) is configured to control the lock device (162) such that the connector (43) is locked upon receiving the lock command and send a completion signal to the command device upon confirming that the connector is locked; and
the command device is configured to
when not receiving the completion signal after sending the lock command, resend the lock command;
when, after resending the lock command, the command device fails to confirm that the connector (43) is locked, stop resending the lock command;
wherein the vehicle further includes a monitoring device (120) configured to identify an SOC of the electrical storage device;
the controller (200) is configured to send the SOC identified by the monitoring device to the command device; and
the command device is configured to receive the SOC, and set, by using the received SOC, a criterion based on which the command device determines that the command device fails to confirm that the connector (43) is locked; and
wherein the command device is configured to, when not receiving the completion signal after a lapse of a predetermined period from initial sending of the lock command, determine that the command device fails to confirm that the connector is locked; and
the command device is configured to, when the SOC is lower than a predetermined value, shorten the predetermined period as compared to when the SOC is higher than or equal to the predetermined value.

3. The power management system according to claim 1 or 2, wherein:
the vehicle further includes a location acquisition device (303) configured to acquire location information of the vehicle;
the controller (200) is configured to send the location information acquired by the location acquisition device to the command device; and
the command device is configured to, when the command device confirms, from the location information received from the controller, that the vehicle has once left from an area near the charge and discharge apparatus and returned again, resend the lock command.

4. The power management system according to claim 1 or 2, wherein the controller (200) or the command device (10, 20, 30, 40) is configured to, when the controller or the command device fails to confirm that the connector (43) is locked, provide the power supplier with notification that the exchange of electric power is not allowed to be started.

5. A power management method in a power management system (1) that exchanges electric power between a vehicle (50; 50A; 50B; 50C) and a power demand and supply system of a power supplier, wherein:
the power management system includes
the vehicle,
a high-voltage battery (110) configured to store electric power for running the vehicle;
a charge and discharge apparatus (40; 40A; 40B) including a cable (42) that passes electric power to be exchanged with the vehicle and a connector (43) configured to connect the cable with the vehicle, and
a command device (10; 20; 30; 40) configured to send a command to the vehicle, wherein the command device comprises a server (10, 20, 30) or a charging station (40); and
the vehicle includes
an inlet (160) electrically connectable with the connector,
a lock device (162) configured to lock the connector (43) such that the connector (43) connected to the inlet (160) does not come off,
an auxiliary battery (130) configured to supply electric power for operation of the lock device (162), and
a controller (200) configured to control the lock device (162) in accordance with the command from the command device;
the power management method comprising:
sending, by the command device, just before an exchange of electric power between the vehicle and the power demand and supply system is started, a lock command to the controller to cause the lock device (162) to lock the connector (43) such that the connector (43) does not come off from the inlet (160);
controlling, by the controller (200), the lock device (162) such that the connector (43) is locked upon receiving the lock command and sending, by the controller, a completion signal to the command device upon confirming that the connector (43) is locked;
when not receiving the completion signal after sending the lock command, resending, by the command device, the lock command; and
when, after resending the lock command, the command device fails to confirm that the connector (43) is locked, stopping resending the lock command;
wherein the vehicle further includes a monitoring device (120) configured to identify an SOC of the electrical storage device;
the controller (200) is configured to send the SOC identified by the monitoring device to the command device; and
the command device is configured to receive the SOC, and set, by using the received SOC, a criterion based on which the command device determines that the command device fails to confirm that the connector (43) is locked; and
wherein the command device is configured to, when the SOC is lower than a predetermined value, reduce the number of times the command device requests to resend the lock command when the command device fails to confirm that the connector (43) is locked, as compared to when the SOC is higher than or equal to the predetermined value.

6. A power management method in a power management system (1) that exchanges electric power between a vehicle (50; 50A; 50B; 50C) and a power demand and supply system of a power supplier, wherein:
the power management system includes
the vehicle,
a high-voltage battery (110) configured to store electric power for running the vehicle;
a charge and discharge apparatus (40; 40A; 40B) including a cable (42) that passes electric power to be exchanged with the vehicle and a connector (43) configured to connect the cable with the vehicle, and
a command device (10; 20; 30; 40) configured to send a command to the vehicle, wherein the command device comprises a server (10, 20, 30) or a charging station (40); and
the vehicle includes
an inlet (160) electrically connectable with the connector,
a lock device (162) configured to lock the connector (43) such that the connector (43) connected to the inlet (160) does not come off,
an auxiliary battery (130) configured to supply electric power for operation of the lock device (162), and
a controller (200) configured to control the lock device (162) in accordance with the command from the command device;
the power management method comprising:
sending, by the command device, just before an exchange of electric power between the vehicle and the power demand and supply system is started, a lock command to the controller to cause the lock device (162) to lock the connector (43) such that the connector (43) does not come off from the inlet (160);
controlling, by the controller (200), the lock device (162) such that the connector (43) is locked upon receiving the lock command and sending, by the controller, a completion signal to the command device upon confirming that the connector (43) is locked;
when not receiving the completion signal after sending the lock command, resending, by the command device, the lock command; and
when, after resending the lock command, the command device fails to confirm that the connector (43) is locked, stopping resending the lock command;
wherein the vehicle further includes a monitoring device (120) configured to identify an SOC of the electrical storage device;
the controller (200) is configured to send the SOC identified by the monitoring device to the command device; and
the command device is configured to receive the SOC, and set, by using the received SOC, a criterion based on which the command device determines that the command device fails to confirm that the connector (43) is locked; and
wherein the command device is configured to, when not receiving the completion signal after a lapse of a predetermined period from initial sending of the lock command, determine that the command device fails to confirm that the connector is locked; and
the command device is configured to, when the SOC is lower than a predetermined value, shorten the predetermined period as compared to when the SOC is higher than or equal to the predetermined value.

## Patentansprüche

1. Leistungsverwaltungssystem (1), umfassend:
ein Fahrzeug (50; 50A; 50B; 50C);
eine Hochspannungsbatterie (110), die zum Speichern elektrischer Leistung zum Betreiben des Fahrzeugs (50; 50A; 50B; 50C) ausgelegt ist;
eine Lade- und Entladevorrichtung (40; 40A; 40B), die ein Kabel (42) umfasst, das zum Leiten elektrischer Leistung ausgelegt ist, die zwischen dem Fahrzeug und einem Stromnachfrage- und Stromversorgungssystem eines Stromversorgers ausgetauscht wird, sowie einen Verbinder (43), der zum Verbinden des Kabels mit dem Fahrzeug (50; 50A; 50B; 50C) ausgelegt ist; und
eine Befehlsvorrichtung (10; 20; 30; 40), die zum Senden eines Befehls an das Fahrzeug ausgelegt ist, wobei die Befehlsvorrichtung einen Server (10, 20, 30) oder eine Ladestation (40) umfasst; und wobei:
das Fahrzeug (50; 50A; 50B; 50C) umfasst:
einen Einlass (160), der elektrisch mit dem Verbinder verbindbar ist,
eine Verriegelungsvorrichtung (162), die zum Verriegeln des Verbinders ausgelegt ist, sodass sich der mit dem Einlass (160) verbundene Verbinder (43) nicht löst,
eine Hilfsbatterie (130), die zum Liefern elektrischer Leistung für den Betrieb der Verriegelungsvorrichtung (162) ausgelegt ist, und
eine Steuervorrichtung (200), die zum Steuern der Verriegelungsvorrichtung gemäß dem Befehl von der Befehlsvorrichtung ausgelegt ist;
die Befehlsvorrichtung dazu ausgelegt ist, unmittelbar bevor ein Austausch elektrischer Leistung zwischen dem Fahrzeug (50; 50A; 50B; 50C) und dem Stromnachfrage- und Stromversorgungssystem gestartet wird, einen Verriegelungsbefehl an die Steuervorrichtung zu senden, um die Verriegelungsvorrichtung (162) zu veranlassen, den Verbinder (43) derart zu verriegeln, dass sich der Verbinder (43) nicht von dem Einlass (160) löst;
die Steuervorrichtung (200) dazu ausgelegt ist, die Verriegelungsvorrichtung (162) derart zu steuern, dass der Verbinder (43) beim Empfangen des Verriegelungsbefehls verriegelt wird, und ein Abschlusssignal an die Befehlsvorrichtung zu senden, nachdem bestätigt wurde, dass der Verbinder verriegelt ist; und
die Befehlsvorrichtung dazu ausgelegt ist,
wenn das Abschlusssignal nach dem Senden des Verriegelungsbefehls nicht empfangen wird, den Verriegelungsbefehl erneut zu senden, und
wenn die Befehlsvorrichtung nach dem erneuten Senden des Verriegelungsbefehls nicht bestätigen kann, dass der Verbinder (43) verriegelt ist, das erneute Senden des Verriegelungsbefehls zu stoppen;
wobei das Fahrzeug ferner eine Überwachungsvorrichtung (120) umfasst, die zum Ermitteln eines Ladezustands der elektrischen Speichervorrichtung ausgelegt ist;
die Steuervorrichtung (200) dazu ausgelegt ist, den durch die Überwachungsvorrichtung ermittelten Ladezustand an die Befehlsvorrichtung zu senden; und
die Befehlsvorrichtung dazu ausgelegt ist, den Ladezustand zu empfangen und unter Verwendung des empfangenen Ladezustands ein Kriterium festzulegen, auf dessen Grundlage die Befehlsvorrichtung bestimmt, dass die Befehlsvorrichtung nicht bestätigen kann, dass der Verbinder (43) verriegelt ist; und
wobei die Befehlsvorrichtung dazu ausgelegt ist, wenn der Ladezustand niedriger als ein vorbestimmter Wert ist, die Anzahl von Malen zu reduzieren, die die Befehlsvorrichtung das erneute Senden des Verriegelungsbefehls anfordert, wenn die Befehlsvorrichtung nicht bestätigen kann, dass der Verbinder (43) verriegelt ist, verglichen mit dem Fall, dass der Ladezustand höher als oder gleich dem vorbestimmten Wert ist.

2. Leistungsverwaltungssystem (1), umfassend:
ein Fahrzeug (50; 50A; 50B; 50C);
eine Hochspannungsbatterie (110), die zum Speichern elektrischer Leistung zum Betreiben des Fahrzeugs (50; 50A; 50B; 50C) ausgelegt ist;
eine Lade- und Entladevorrichtung (40; 40A; 40B), die ein Kabel (42) umfasst, das zum Leiten elektrischer Leistung ausgelegt ist, die zwischen dem Fahrzeug und einem Stromnachfrage- und Stromversorgungssystem eines Stromversorgers ausgetauscht wird, sowie einen Verbinder (43), der zum Verbinden des Kabels mit dem Fahrzeug (50; 50A; 50B; 50C) ausgelegt ist; und
eine Befehlsvorrichtung (10; 20; 30; 40), die zum Senden eines Befehls an das Fahrzeug ausgelegt ist, wobei die Befehlsvorrichtung einen Server (10, 20, 30) oder eine Ladestation (40) umfasst; und wobei:
das Fahrzeug (50; 50A; 50B; 50C) umfasst:
einen Einlass (160), der elektrisch mit dem Verbinder verbindbar ist,
eine Verriegelungsvorrichtung (162), die zum Verriegeln des Verbinders ausgelegt ist, sodass sich der mit dem Einlass (160) verbundene Verbinder (43) nicht löst,
eine Hilfsbatterie (130), die zum Liefern elektrischer Leistung für den Betrieb der Verriegelungsvorrichtung (162) ausgelegt ist, und
eine Steuervorrichtung (200), die zum Steuern der Verriegelungsvorrichtung gemäß dem Befehl von der Befehlsvorrichtung ausgelegt ist;
die Befehlsvorrichtung dazu ausgelegt ist, unmittelbar bevor ein Austausch elektrischer Leistung zwischen dem Fahrzeug (50; 50A; 50B; 50C) und dem Stromnachfrage- und Stromversorgungssystem gestartet wird, einen Verriegelungsbefehl an die Steuervorrichtung zu senden, um die Verriegelungsvorrichtung (162) zu veranlassen, den Verbinder (43) derart zu verriegeln, dass sich der Verbinder (43) nicht von dem Einlass (160) löst;
die Steuervorrichtung (200) dazu ausgelegt ist, die Verriegelungsvorrichtung (162) derart zu steuern, dass der Verbinder (43) beim Empfangen des Verriegelungsbefehls verriegelt wird, und ein Abschlusssignal an die Befehlsvorrichtung zu senden, nachdem bestätigt wurde, dass der Verbinder verriegelt ist; und
die Befehlsvorrichtung dazu ausgelegt ist,
wenn das Abschlusssignal nach dem Senden des Verriegelungsbefehls nicht empfangen wird, den Verriegelungsbefehl erneut zu senden;
wenn die Befehlsvorrichtung nach dem erneuten Senden des Verriegelungsbefehls nicht bestätigen kann, dass der Verbinder (43) verriegelt ist, das erneute Senden des Verriegelungsbefehls zu stoppen;
wobei das Fahrzeug ferner eine Überwachungsvorrichtung (120) umfasst, die zum Ermitteln eines Ladezustands der elektrischen Speichervorrichtung ausgelegt ist;
die Steuervorrichtung (200) dazu ausgelegt ist, den durch die Überwachungsvorrichtung ermittelten Ladezustand an die Befehlsvorrichtung zu senden; und
die Befehlsvorrichtung dazu ausgelegt ist, den Ladezustand zu empfangen und unter Verwendung des empfangenen Ladezustands ein Kriterium festzulegen, auf dessen Grundlage die Befehlsvorrichtung bestimmt, dass die Befehlsvorrichtung nicht bestätigen kann, dass der Verbinder (43) verriegelt ist; und
wobei die Befehlsvorrichtung dazu ausgelegt ist, wenn das Abschlusssignal nach Ablauf eines vorbestimmten Zeitraums seit dem anfänglichen Senden des Verriegelungsbefehls nicht empfangen wird, zu bestimmen, dass die Befehlsvorrichtung nicht bestätigen kann, dass der Verbinder verriegelt ist; und
die Befehlsvorrichtung dazu ausgelegt ist, wenn der Ladezustand niedriger als ein vorbestimmter Wert ist, den vorbestimmten Zeitraum im Vergleich zu dem Fall zu verkürzen, dass der Ladezustand höher als oder gleich dem vorbestimmten Wert ist.

3. Leistungsverwaltungssystem nach Anspruch 1 oder 2, wobei:
das Fahrzeug ferner eine Standorterfassungsvorrichtung (303) umfasst, die zum Erfassen von Standortinformationen des Fahrzeugs ausgelegt ist;
die Steuervorrichtung (200) dazu ausgelegt ist, die durch die Standorterfassungsvorrichtung erfassten Standortinformationen an die Befehlsvorrichtung zu senden; und
die Befehlsvorrichtung dazu ausgelegt ist, wenn die Befehlsvorrichtung anhand der von der Steuervorrichtung empfangenen Standortinformationen bestätigt, dass das Fahrzeug einen Bereich nahe der Lade- und Entladevorrichtung einmal verlassen hat und erneut zurückgekehrt ist, den Verriegelungsbefehl erneut zu senden.

4. Leistungsverwaltungssystem nach Anspruch 1 oder 2, wobei die Steuervorrichtung (200) oder die Befehlsvorrichtung (10, 20, 30, 40) dazu ausgelegt ist, wenn die Steuervorrichtung oder die Befehlsvorrichtung nicht bestätigen kann, dass der Verbinder (43) verriegelt ist, dem Stromversorger eine Benachrichtigung bereitzustellen, dass der Austausch elektrischer Leistung nicht gestartet werden darf.

5. Leistungsverwaltungsverfahren in einem Leistungsverwaltungssystem (1), das elektrische Leistung zwischen einem Fahrzeug (50; 50A; 50B; 50C) und einem Stromnachfrage- und Stromversorgungssystem eines Stromversorgers austauscht, wobei:
das Leistungsverwaltungssystem umfasst:
das Fahrzeug,
eine Hochspannungsbatterie (110), die zum Speichern elektrischer Leistung zum Betreiben des Fahrzeugs ausgelegt ist;
eine Lade- und Entladevorrichtung (40; 40A; 40B), die ein Kabel (42) umfasst, das zum Leiten elektrischer Leistung ausgelegt ist, die mit dem Fahrzeug auszutauschen ist, sowie einen Verbinder (43), der zum Verbinden des Kabels mit dem Fahrzeug ausgelegt ist, und
eine Befehlsvorrichtung (10; 20; 30; 40), die zum Senden eines Befehls an das Fahrzeug ausgelegt ist, umfasst, wobei die Befehlsvorrichtung einen Server (10, 20, 30) oder eine Ladestation (40) umfasst; und
das Fahrzeug umfasst:
einen Einlass (160), der elektrisch mit dem Verbinder verbindbar ist,
eine Verriegelungsvorrichtung (162), die zum Verriegeln des Verbinders (43) ausgelegt ist, sodass sich der mit dem Einlass (160) verbundene Verbinder (43) nicht löst,
eine Hilfsbatterie (130), die zum Liefern elektrischer Leistung für den Betrieb der Verriegelungsvorrichtung (162) ausgelegt ist, und
eine Steuervorrichtung (200), die zum Steuern der Verriegelungsvorrichtung (162) gemäß dem Befehl von der Befehlsvorrichtung ausgelegt ist;
wobei das Leistungsverwaltungsverfahren umfasst:
Senden, durch die Befehlsvorrichtung, unmittelbar bevor ein Austausch elektrischer Leistung zwischen dem Fahrzeug und dem Stromnachfrage- und Stromversorgungssystem gestartet wird, eines Verriegelungsbefehls an die Steuervorrichtung, um die Verriegelungsvorrichtung (162) zu veranlassen, den Verbinder (43) derart zu verriegeln, dass sich der Verbinder (43) nicht von dem Einlass (160) löst;
Steuern, durch die Steuervorrichtung (200), der Verriegelungsvorrichtung (162) derart, dass der Verbinder (43) beim Empfangen des Verriegelungsbefehls verriegelt wird, und Senden, durch die Steuervorrichtung, eines Abschlusssignals an die Befehlsvorrichtung nach dem Bestätigen, dass der Verbinder (43) verriegelt ist;
wenn das Abschlusssignal nach dem Senden des Verriegelungsbefehls nicht empfangen wird, erneutes Senden des Verriegelungsbefehls durch die Befehlsvorrichtung; und
wenn die Befehlsvorrichtung nach dem erneuten Senden des Verriegelungsbefehls nicht bestätigen kann, dass der Verbinder (43) verriegelt ist, Stoppen des erneuten Sendens des Verriegelungsbefehls;
wobei das Fahrzeug ferner eine Überwachungsvorrichtung (120) umfasst, die zum Ermitteln eines Ladezustands der elektrischen Speichervorrichtung ausgelegt ist;
die Steuervorrichtung (200) dazu ausgelegt ist, den durch die Überwachungsvorrichtung ermittelten Ladezustand an die Befehlsvorrichtung zu senden; und
die Befehlsvorrichtung dazu ausgelegt ist, den Ladezustand zu empfangen und unter Verwendung des empfangenen Ladezustands ein Kriterium festzulegen, auf dessen Grundlage die Befehlsvorrichtung bestimmt, dass die Befehlsvorrichtung nicht bestätigen kann, dass der Verbinder (43) verriegelt ist; und
wobei die Befehlsvorrichtung dazu ausgelegt ist, wenn der Ladezustand niedriger als ein vorbestimmter Wert ist, die Anzahl von Malen zu reduzieren, die die Befehlsvorrichtung das erneute Senden des Verriegelungsbefehls anfordert, wenn die Befehlsvorrichtung nicht bestätigen kann, dass der Verbinder (43) verriegelt ist, verglichen mit dem Fall, dass der Ladezustand höher als oder gleich dem vorbestimmten Wert ist.

6. Leistungsverwaltungsverfahren in einem Leistungsverwaltungssystem (1), das elektrische Leistung zwischen einem Fahrzeug (50; 50A; 50B; 50C) und einem Stromnachfrage- und Stromversorgungssystem eines Stromversorgers austauscht, wobei:
das Leistungsverwaltungssystem umfasst:
das Fahrzeug,
eine Hochspannungsbatterie (110), die zum Speichern elektrischer Leistung zum Betreiben des Fahrzeugs ausgelegt ist;
eine Lade- und Entladevorrichtung (40; 40A; 40B), die ein Kabel (42) umfasst, das zum Leiten elektrischer Leistung ausgelegt ist, die mit dem Fahrzeug auszutauschen ist, sowie einen Verbinder (43), der zum Verbinden des Kabels mit dem Fahrzeug ausgelegt ist, und
eine Befehlsvorrichtung (10; 20; 30; 40), die zum Senden eines Befehls an das Fahrzeug ausgelegt ist, umfasst, wobei die Befehlsvorrichtung einen Server (10, 20, 30) oder eine Ladestation (40) umfasst; und
das Fahrzeug umfasst:
einen Einlass (160), der elektrisch mit dem Verbinder verbindbar ist,
eine Verriegelungsvorrichtung (162), die zum Verriegeln des Verbinders (43) ausgelegt ist, sodass sich der mit dem Einlass (160) verbundene Verbinder (43) nicht löst,
eine Hilfsbatterie (130), die zum Liefern elektrischer Leistung für den Betrieb der Verriegelungsvorrichtung (162) ausgelegt ist, und
eine Steuervorrichtung (200), die zum Steuern der Verriegelungsvorrichtung (162) gemäß dem Befehl von der Befehlsvorrichtung ausgelegt ist;
wobei das Leistungsverwaltungsverfahren umfasst:
Senden, durch die Befehlsvorrichtung, unmittelbar bevor ein Austausch elektrischer Leistung zwischen dem Fahrzeug und dem Stromnachfrage- und Stromversorgungssystem gestartet wird, eines Verriegelungsbefehls an die Steuervorrichtung, um die Verriegelungsvorrichtung (162) zu veranlassen, den Verbinder (43) derart zu verriegeln, dass sich der Verbinder (43) nicht von dem Einlass (160) löst;
Steuern, durch die Steuervorrichtung (200), der Verriegelungsvorrichtung (162) derart, dass der Verbinder (43) beim Empfangen des Verriegelungsbefehls verriegelt wird, und Senden, durch die Steuervorrichtung, eines Abschlusssignals an die Befehlsvorrichtung nach dem Bestätigen, dass der Verbinder (43) verriegelt ist;
wenn das Abschlusssignal nach dem Senden des Verriegelungsbefehls nicht empfangen wird, erneutes Senden des Verriegelungsbefehls durch die Befehlsvorrichtung; und
wenn die Befehlsvorrichtung nach dem erneuten Senden des Verriegelungsbefehls nicht bestätigen kann, dass der Verbinder (43) verriegelt ist, Stoppen des erneuten Sendens des Verriegelungsbefehls;
wobei das Fahrzeug ferner eine Überwachungsvorrichtung (120) umfasst, die zum Ermitteln eines Ladezustands der elektrischen Speichervorrichtung ausgelegt ist;
die Steuervorrichtung (200) dazu ausgelegt ist, den durch die Überwachungsvorrichtung ermittelten Ladezustand an die Befehlsvorrichtung zu senden; und
die Befehlsvorrichtung dazu ausgelegt ist, den Ladezustand zu empfangen und unter Verwendung des empfangenen Ladezustands ein Kriterium festzulegen, auf dessen Grundlage die Befehlsvorrichtung bestimmt, dass die Befehlsvorrichtung nicht bestätigen kann, dass der Verbinder (43) verriegelt ist; und
wobei die Befehlsvorrichtung dazu ausgelegt ist, wenn das Abschlusssignal nach Ablauf eines vorbestimmten Zeitraums seit dem anfänglichen Senden des Verriegelungsbefehls nicht empfangen wird, zu bestimmen, dass die Befehlsvorrichtung nicht bestätigen kann, dass der Verbinder verriegelt ist; und
die Befehlsvorrichtung dazu ausgelegt ist, wenn der Ladezustand niedriger als ein vorbestimmter Wert ist, den vorbestimmten Zeitraum im Vergleich zu dem Fall zu verkürzen, dass der Ladezustand höher als oder gleich dem vorbestimmten Wert ist.

## Revendications

1. Système de gestion d'énergie (1) comprenant :
un véhicule (50 ; 50A ; 50B ; 50C) ;
une batterie haute tension (110) configurée pour stocker de l'énergie électrique pour faire fonctionner le véhicule (50 ; 50A ; 50B ; 50C) ;
un appareil de charge et de décharge (40 ; 40A ; 40B) incluant un câble (42) qui fait passer de l'énergie électrique à échanger entre le véhicule et un système de demande et d'offre d'énergie d'un fournisseur d'énergie et un connecteur (43) configuré pour connecter le câble au véhicule (50 ; 50A ; 50B ; 50C) ; et
un dispositif de commande (10 ; 20 ; 30 ; 40) configuré pour envoyer une commande au véhicule, le dispositif de commande comprenant un serveur (10, 20, 30) ou une station de charge (40) ; et dans lequel :
le véhicule (50 ; 50A ; 50B ; 50C) inclut
une entrée (160) électriquement connectable au connecteur,
un dispositif de verrouillage (162) configuré pour verrouiller le connecteur de telle sorte que le connecteur (43) connecté à l'entrée (160) ne se détache pas,
une batterie auxiliaire (130) configurée pour fournir de l'énergie électrique pour l'exploitation du dispositif de verrouillage (162), et
un contrôleur (200) configuré pour contrôler le dispositif de verrouillage conformément à la commande en provenance du dispositif de commande ;
le dispositif de commande est configuré pour, juste avant qu'un échange d'énergie électrique entre le véhicule (50 ; 50A ; 50B ; 50C) et le système de demande et d'offre d'énergie ne soit démarré, envoyer une commande de verrouillage au contrôleur pour amener le dispositif de verrouillage (162) à verrouiller le connecteur (43) de telle sorte que le connecteur (43) ne se détache pas de l'entrée (160) ;
le contrôleur (200) est configuré pour contrôler le dispositif de verrouillage (162) de telle sorte que le connecteur (43) soit verrouillé lors de la réception de la commande de verrouillage et envoyer un signal d'achèvement au dispositif de commande lors de la confirmation que le connecteur est verrouillé ; et
le dispositif de commande est configuré pour
en cas de non réception du signal d'achèvement après l'envoi de la commande de verrouillage, renvoyer la commande de verrouillage, et
lorsque, après avoir renvoyé la commande de verrouillage, le dispositif de commande échoue à confirmer que le connecteur (43) est verrouillé, arrêter de renvoyer la commande de verrouillage ;
dans lequel le véhicule inclut en outre un dispositif de surveillance (120) configuré pour identifier un SOC (état de charge) du dispositif de stockage électrique ;
le contrôleur (200) est configuré pour envoyer le SOC identifié par le dispositif de surveillance au dispositif de commande ; et
le dispositif de commande est configuré pour recevoir le SOC, et établir, en utilisant le SOC reçu, un critère sur la base duquel le dispositif de commande détermine que le dispositif de commande échoue à confirmer que le connecteur (43) est verrouillé ; et
dans lequel le dispositif de commande est configuré pour, lorsque le SOC est inférieur à une valeur prédéterminée, réduire le nombre de fois où le dispositif de commande demande de renvoyer la commande de verrouillage lorsque le dispositif de commande échoue à confirmer que le connecteur (43) est verrouillé, comparé à lorsque le SOC est supérieur ou égal à la valeur prédéterminée.

2. Système de gestion d'énergie (1) comprenant :
un véhicule (50 ; 50A ; 50B ; 50C) ;
une batterie haute tension (110) configurée pour stocker de l'énergie électrique pour faire fonctionner le véhicule (50 ; 50A ; 50B ; 50C) ;
un appareil de charge et de décharge (40 ; 40A ; 40B) incluant un câble (42) qui fait passer de l'énergie électrique à échanger entre le véhicule et un système de demande et d'offre d'énergie d'un fournisseur d'énergie et un connecteur (43) configuré pour connecter le câble au véhicule (50 ; 50A ; 50B ; 50C) ; et
un dispositif de commande (10 ; 20 ; 30 ; 40) configuré pour envoyer une commande au véhicule, le dispositif de commande comprenant un serveur (10, 20, 30) ou une station de charge (40) ; et dans lequel :
le véhicule (50 ; 50A ; 50B ; 50C) inclut une entrée (160) électriquement connectable au connecteur,
un dispositif de verrouillage (162) configuré pour verrouiller le connecteur de telle sorte que le connecteur (43) connecté à l'entrée (160) ne se détache pas,
une batterie auxiliaire (130) configurée pour fournir de l'énergie électrique pour l'exploitation du dispositif de verrouillage (162), et
un contrôleur (200) configuré pour contrôler le dispositif de verrouillage conformément à la commande en provenance du dispositif de commande ;
le dispositif de commande est configuré pour, juste avant qu'un échange d'énergie électrique entre le véhicule (50 ; 50A ; 50B ; 50C) et le système de demande et d'offre d'énergie ne soit démarré, envoyer une commande de verrouillage au contrôleur pour amener le dispositif de verrouillage (162) à verrouiller le connecteur (43) de telle sorte que le connecteur (43) ne se détache pas de l'entrée (160) ;
le contrôleur (200) est configuré pour contrôler le dispositif de verrouillage (162) de telle sorte que le connecteur (43) soit verrouillé lors de la réception de la commande de verrouillage et envoyer un signal d'achèvement au dispositif de commande lors de la confirmation que le connecteur est verrouillé ; et
le dispositif de commande est configuré pour
en cas de non réception du signal d'achèvement après l'envoi de la commande de verrouillage, renvoyer la commande de verrouillage ;
lorsque, après avoir renvoyé la commande de verrouillage, le dispositif de commande échoue à confirmer que le connecteur (43) est verrouillé, arrêter de renvoyer la commande de verrouillage ;
dans lequel le véhicule inclut en outre un dispositif de surveillance (120) configuré pour identifier un état de charge (SOC) du dispositif de stockage électrique ;
le contrôleur (200) est configuré pour envoyer le SOC identifié par le dispositif de surveillance au dispositif de commande ; et
le dispositif de commande est configuré pour recevoir le SOC, et établir, en utilisant le SOC reçu, un critère sur la base duquel le dispositif de commande détermine que le dispositif de commande échoue à confirmer que le connecteur (43) est verrouillé ; et
dans lequel le dispositif de commande est configuré pour, lorsqu'il ne reçoit pas le signal d'achèvement après un écoulement d'une période prédéterminée à partir de l'envoi initial de la commande de verrouillage, déterminer que le dispositif de commande échoue à confirmer que le connecteur est verrouillé ; et
le dispositif de commande est configuré pour, lorsque le SOC est inférieur à une valeur prédéterminée, raccourcir la période prédéterminée comparé à lorsque le SOC est supérieur ou égal à la valeur prédéterminée.

3. Système de gestion d'énergie selon la revendication 1 ou la revendication 2, dans lequel :
le véhicule inclut en outre un dispositif d'acquisition de localisation (303) configuré pour acquérir des informations de localisation du véhicule ;
le contrôleur (200) est configuré pour envoyer les informations de localisation acquises par le dispositif d'acquisition de localisation au dispositif de commande ; et
le dispositif de commande est configuré pour, lorsque le dispositif de commande confirme, à partir des informations de localisation reçues en provenance du contrôleur, que le véhicule a quitté une fois une zone proche de l'appareil de charge et de décharge et y est revenu à nouveau, renvoyer la commande de verrouillage.

4. Système de gestion d'énergie selon la revendication 1 ou la revendication 2, dans lequel le contrôleur (200) ou le dispositif de commande (10, 20, 30, 40) est configuré pour, lorsque le contrôleur ou le dispositif de commande échoue à confirmer que le connecteur (43) est verrouillé, donner au fournisseur d'énergie une notification que l'échange d'énergie électrique n'est pas autorisé à démarrer.

5. Procédé de gestion d'énergie dans un système de gestion d'énergie (1) qui échange de l'énergie électrique entre un véhicule (50 ; 50A ; 50B ; 50C) et un système de demande et d'offre d'énergie d'un fournisseur d'énergie, dans lequel :
le système de gestion d'énergie inclut
le véhicule,
une batterie haute tension (110) configurée pour stocker de l'énergie électrique pour faire fonctionner le véhicule ;
un appareil de charge et de décharge (40 ; 40A ; 40B) incluant un câble (42) qui fait passer de l'énergie électrique à échanger avec le véhicule et un connecteur (43) configuré pour connecter le câble au véhicule, et
un dispositif de commande (10 ; 20 ; 30 ; 40) configuré pour envoyer une commande au véhicule, le dispositif de commande comprenant un serveur (10, 20, 30) ou une station de charge (40) ; et
le véhicule inclut
une entrée (160) électriquement connectable au connecteur,
un dispositif de verrouillage (162) configuré pour verrouiller le connecteur (43) de telle sorte que le connecteur (43) connecté à l'entrée (160) ne se détache pas,
une batterie auxiliaire (130) configurée pour fournir de l'énergie électrique pour l'exploitation du dispositif de verrouillage (162), et
un contrôleur (200) configuré pour contrôler le dispositif de verrouillage (162) conformément à la commande en provenance du dispositif de commande ;
le procédé de gestion d'énergie comprenant :
l'envoi, par le dispositif de commande, juste avant qu'un échange d'énergie électrique entre le véhicule et le système de demande et d'offre d'énergie ne soit démarré, d'une commande de verrouillage au contrôleur pour amener le dispositif de verrouillage (162) à verrouiller le connecteur (43) de telle sorte que le connecteur (43) ne se détache pas de l'entrée (160) ;
le contrôle, par le contrôleur (200), du dispositif de verrouillage (162) de telle sorte que le connecteur (43) soit verrouillé lors de la réception de la commande de verrouillage et l'envoi, par le contrôleur, d'un signal d'achèvement au dispositif de commande lors de la confirmation que le connecteur (43) est verrouillé ;
en cas de non réception du signal d'achèvement après l'envoi de la commande de verrouillage, le renvoi, par le dispositif de commande de la commande, de verrouillage ; et
lorsque, après avoir renvoyé la commande de verrouillage, le dispositif de commande échoue à confirmer que le connecteur (43) est verrouillé, l'arrêt du renvoi de la commande de verrouillage ;
dans lequel le véhicule comprend en outre un dispositif de surveillance (120) configuré pour identifier un état de charge (SOC) du dispositif de stockage électrique ;
le contrôleur (200) est configuré pour envoyer le SOC identifié par le dispositif de surveillance au dispositif de commande ; et
le dispositif de commande est configuré pour recevoir le SOC, et établir, en utilisant le SOC reçu, un critère sur la base duquel le dispositif de commande détermine que le dispositif de commande échoue à confirmer que le connecteur (43) est verrouillé ; et
dans lequel le dispositif de commande est configuré pour, lorsque le SOC est inférieur à une valeur prédéterminée, réduire le nombre de fois où le dispositif de commande demande de renvoyer la commande de verrouillage lorsque le dispositif de commande échoue à confirmer que le connecteur (43) est verrouillé, comparé à lorsque le SOC est supérieur ou égal à la valeur prédéterminée.

6. Procédé de gestion d'énergie dans un système de gestion d'énergie (1) qui échange de l'énergie électrique entre un véhicule (50 ; 50A ; 50B ; 50C) et un système de demande et d'offre d'énergie d'un fournisseur d'énergie, dans lequel :
le système de gestion d'énergie inclut
le véhicule,
une batterie haute tension (110) configurée pour stocker de l'énergie électrique pour faire fonctionner le véhicule ;
un appareil de charge et de décharge (40 ; 40A ; 40B) incluant un câble (42) qui fait passer de l'énergie électrique à échanger avec le véhicule et un connecteur (43) configuré pour connecter le câble au véhicule, et
un dispositif de commande (10 ; 20 ; 30 ; 40) configuré pour envoyer une commande au véhicule, le dispositif de commande comprenant un serveur (10, 20, 30) ou une station de charge (40) ; et
le véhicule inclut
une entrée (160) électriquement connectable au connecteur,
un dispositif de verrouillage (162) configuré pour verrouiller le connecteur (43) de telle sorte que le connecteur (43) connecté à l'entrée (160) ne se détache pas,
une batterie auxiliaire (130) configurée pour fournir de l'énergie électrique pour l'exploitation du dispositif de verrouillage (162), et
un contrôleur (200) configuré pour contrôler le dispositif de verrouillage (162) conformément à la commande en provenance du dispositif de commande ;
le procédé de gestion d'énergie comprenant :
l'envoi, par le dispositif de commande, juste avant qu'un échange d'énergie électrique entre le véhicule et le système de demande et d'offre d'énergie ne soit démarré, d'une commande de verrouillage au contrôleur pour amener le dispositif de verrouillage (162) à verrouiller le connecteur (43) de telle sorte que le connecteur (43) ne se détache pas de l'entrée (160) ;
le contrôle, par le contrôleur (200), du dispositif de verrouillage (162) de telle sorte que le connecteur (43) soit verrouillé lors de la réception de la commande de verrouillage et l'envoi, par le contrôleur, d'un signal d'achèvement au dispositif de commande lors de la confirmation que le connecteur (43) est verrouillé ;
en cas de non réception du signal d'achèvement après l'envoi de la commande de verrouillage, le renvoi, par le dispositif de commande de la commande, de verrouillage ; et
lorsque, après avoir renvoyé la commande de verrouillage, le dispositif de commande échoue à confirmer que le connecteur (43) est verrouillé, l'arrêt du renvoi de la commande de verrouillage ;
dans lequel le véhicule inclut en outre un dispositif de surveillance (120) configuré pour identifier un état de charge (SOC) du dispositif de stockage électrique ;
le contrôleur (200) est configuré pour envoyer le SOC identifié par le dispositif de surveillance au dispositif de commande ; et
le dispositif de commande est configuré pour recevoir le SOC, et établir, en utilisant le SOC reçu, un critère sur la base duquel le dispositif de commande détermine que le dispositif de commande échoue à confirmer que le connecteur (43) est verrouillé ; et
dans lequel le dispositif de commande est configuré pour, lorsqu'il ne reçoit pas le signal d'achèvement après un écoulement d'une période prédéterminée à partir de l'envoi initial de la commande de verrouillage, déterminer que le dispositif de commande échoue à confirmer que le connecteur est verrouillé ; et
le dispositif de commande est configuré pour, lorsque le SOC est inférieur à une valeur prédéterminée, raccourcir la période prédéterminée comparé à lorsque le SOC est supérieur ou égal à la valeur prédéterminée.
